# EUROPEAN PATENT APPLICATION

(11) **EP 2 892 125 A2**
(43) Date of publication of application: **08.07.2015**
(21) Application number: 14195528.6
(22) Date of filing: 28.11.2014
(51) Int. Cl.: H02J 7/00

(54) **Battery charging device and battery charging method**

(30) Priority: 06.01.2014 KR 20140001441
(71) Applicant: Samsung SDI Co., Ltd., Yongin-si, Gyeonggi-do (KR)
(72) Inventor: Kam, Jae-Woo, Gyeonggi-do (KR); Takechi, Hiroaki, Gyeonggi-do (KR); Han, Won-Chull, Gyeonggi-do (KR)
(74) Representative: Walaski, Jan Filip

(57) **Abstract**

A battery charging device according to an exemplary embodiment of the present invention includes: a charging unit connected to a battery module including at least one battery cell and charging the battery module; and a charge control part receiving number measurement information regarding whether an open circuit voltage (OCV) value of the battery module is determined to be within a predetermined voltage section from a battery management system managing the battery module and transmitting a discharge start signal to the battery management system to discharge the battery module if the measurement number exceeds a predetermined number.

## Description

The present invention relates to a battery charging device and a battery charging method for charging a battery pack. More particularly, the present invention relates to a battery charging device that effectively charges a battery, and a battery charging method.

As the problem of environmental disruption and resource exhaustion occurs, interest in a system that can store power and that can efficiently use the stored power has increased. A power storage system may store generated power in a battery and supply power that is stored in this way to a load.

A rechargeable battery capable of charging and discharging may be generally used for the power storage system in order to store power. The rechargeable battery differs from a primary battery in that it can be repeatedly charged and discharged, while the latter is incapable of being recharged. The rechargeable battery may be used as a single battery or a battery module in which a plurality of batteries are combined as a single unit, depending on the external devices to which it is applied.

The present invention aims to provide a battery charging device in which battery charging is prevented in a flat section when charging the battery.

According to an aspect of the invention, there is provided a battery charging device comprising a charging unit connectable to a battery pack, the battery pack comprising a battery module that includes at least one battery cell, and a charge control part arranged to receive information relating to the number of measurements in which an open circuit voltage OCV value of the battery module is determined to be within a predetermined voltage range, the charge control part being arranged to discharge the battery module if the number of measurements exceeds a predetermined threshold.

The charge control part is arranged to discharge the battery module to make the OCV of the battery module lower than the lower boundary of a predetermined voltage range. The charge control part determines that the battery module is within a flat section if the number of measurements in which the OCV of the battery module is within a predetermined voltage range exceeds a predetermined threshold.

When the OCV of the battery module is lower than the lower boundary, the charge control part may start to charge the battery module.

The charge control part may be arranged to receive open circuit voltage information of the battery module, and to transmit a discharge start signal to the battery module when the number of measurements exceeds the predetermined threshold.

The charge control part may be arranged to transmit a charging start signal to the battery module to charge the battery module if the open circuit voltage is outside the predetermined voltage range.

The charging unit may include a charging terminal connected to the battery module and a coulomb counter measuring an open circuit voltage of the battery module by using the charging terminal and the charge control part may be arranged to transmit the discharge start signal in response to the open circuit voltage value as measured by the coulomb counter.

If the measurement number is less than the predetermined number, the charge control part is arranged to continue to charge the battery module.

The open circuit voltage may be periodically measured by a battery management system, the number of measurements being incremented when the periodic measurement indicates that the open circuit voltage is within the predetermined voltage range.

According to a further aspect of the invention, there is provided a battery charging device comprising a charging unit connected to a battery module including at least one battery cell and charging the battery module and a charge control part measuring an open circuit voltage of the battery module and controlling the charging unit to discharge the battery module when the open circuit voltage value is within a predetermined voltage section.

The charge control part may control the charging unit to charge the battery module if the open circuit voltage is outside the predetermined voltage section.

According to a further aspect of the invention, there is provided a battery charging method comprising receiving number measurement information of which an open circuit voltage value of the battery module is determined within a predetermined voltage section from a battery management system managing a battery module including at least one battery cell; and transmitting a signal for discharging the battery module to the battery management system if it is determined that the number measurement exceeds a predetermined number.

The battery charging method may further comprise receiving the open circuit voltage information of the battery module from the battery management system and generating the signal for discharging the battery module if the open circuit voltage is within the predetermined voltage section.

The battery charging method may further comprise transmitting the signal charging the battery module to the battery management system if it is determined that the open circuit voltage is outside the predetermined voltage section from the open circuit voltage information.

The battery charging method may further comprise transmitting the signal charging the battery module to the battery management system, if it is determined that the measurement number is less than the predetermined number.

The measurement number includes a number of which the open circuit voltage within the predetermined voltage section is measured when the open circuit voltage is periodically measured by the battery management system.

According to a still further aspect of the invention, there is provided a battery charging method comprising measuring an open circuit voltage of a battery module if the battery module including at least one battery cell is connected, transmitting a signal for discharging the battery module to a battery management system managing the battery module when the open circuit voltage is within a predetermined voltage section and transmitting a signal for charging the battery module to the battery management system if the open circuit voltage is outside the predetermined voltage section according to the discharge of the battery module.

Embodiments of the invention will now be described by way of example with reference to the accompanying drawings, in which:
FIG. 1 is a block diagram of a battery charging system according to an exemplary embodiment of the present invention.
FIG. 2 is a flowchart of a battery charging method according to a first exemplary embodiment of the present invention.
FIG. 3 is a graph of an OCV of a battery charged by a battery charging method according to a first exemplary embodiment of the present invention.
FIG. 4 is a flowchart of a battery charging method according to a second exemplary embodiment of the present invention.
FIG. 5 is a graph of an OCV of a battery charged by a battery charging method according to a second exemplary embodiment of the present invention.

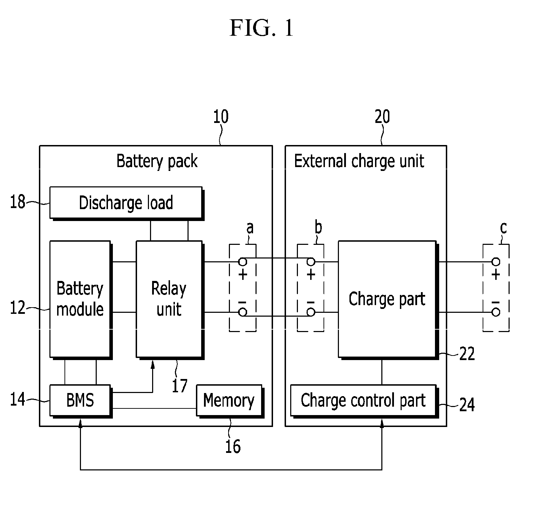

Referring to FIG. 1, a battery pack 10 may be connected to a charging unit 20.

The battery pack 10 includes a battery module 12, a battery management system (hereafter referred to as "BMS") 14, a memory 16, a relay part 17, and a discharge load 18.

Firstly, the battery module 12 may include a plurality of battery cells connected in series or in parallel and that are capable of being charged and discharged. Here, each cell may be a nickel-cadmium battery, a lead storage battery, a nickel-hydrogen battery, a lithium-ion battery, a lithium polymer battery and the like. The type of battery cell is not limited to the above list.

Also, the battery cell may be a cylindrical battery, a prismatic battery, a pouch battery or equivalent. However, the shape of the battery cell is not limited to this list. The plurality of battery cells form one battery module 12, and may be used as a power source of an electric vehicle or a hybrid vehicle. Further, the battery pack 10 includes a pack terminal a, and the pack terminal a may be connected to a charging part 22 of the charging unit 20 to charge the battery module 12.

Also, the BMS 14 to efficiently manage the charge and discharge operation of the battery module 12 is provided. The BMS 14 manages the charge and discharge of the battery module 12, and may measure open circuit voltage (hereafter referred to as "OCV"), current, temperature, etc., of each battery cell. Here, the OCV measures the voltage in a no-load state such that the discharge load 18 is not operated when measuring the OCV of the battery cell.

The BMS 14 measures the OCV, the current, the temperature, load cycle etc., of each battery cell, thereby estimating the OCV of the entire battery module, a state of charge (hereafter referred to as "SOC") of each cell, and a state of health (hereafter referred to as "SOH"), and storing the OCV of the entire battery module, the SOC and the SOH of each battery cell, the current, and the temperature of each battery cell to the memory 16 or transmitting them to the charging unit 20 connected by wire or wirelessly.

In this case, the BMS 14 may include a coulomb counter measuring the charge of each battery cell.

Also, the BMS 14 may determine whether the OCV of the battery module 12 is changed within a flat section (ie. within a predetermined voltage range). For example, the BMS 14 may periodically measure the OCV of the battery module 12.

Also, the BMS 14 accumulates the number of times that the measured OCV falls within the flat section. The flat section is a region in which the amount of change of the OCV for the change in the SOC is no more than a predetermined threshold value in a SOC-OCV relation curve. For example, the OCV of a battery may stay within a predetermined range (close to the nominal battery voltage) over a range of charge states from fully charged down to relatively deeply discharged, before it begins to fall much more steeply as the battery is further discharged. Instead of the SOC, other factors such as a charging current, a discharge current, a charging elapsed time, a discharge elapsed time etc, may be used.

That is, while the power of the battery module 12 is used, when the OCV that is periodically measured is within the flat section, the BMS 14 may accumulate the number of times that the OCV is measured within the flat section and store it to the memory 16.

Also, according to the control of the BMS 14, the relay part 17 may perform a switching operation of connecting the battery module 12 and the pack terminal a, or electrically connecting the battery module 12 and the discharge load 18.

Next, the discharge load 18 as a load consuming the power stored in the battery module 12 is connected to the battery module 12 by the switching operation of the relay part 17, thereby discharging the battery module 12.

The charging unit 20 includes the charging part 22 and a charge control part 24. The charging unit 20 may charge the battery pack 10.

The charging part 22 charges the battery pack 10 and includes a charging terminal b. The charging part 22 charges the battery pack 10 if the charging terminal b is connected to the pack terminal a of the battery pack 10. At this time, a positive terminal of the charging part 22 may be connected to a positive terminal of the battery pack 10, and a negative terminal of the charging part 22 may be connected to a negative terminal of the battery pack 10.

Thus, the charging part 22 supplies power supplied to an outer terminal c connected to an external power source to the battery module 12 to charge the battery pack 10.

The charge control part 24 may charge or discharge the battery module 12 through the charging part 22 if the charging terminal b is connected to the pack terminal a of the battery pack 10. Also, the charge control part 24 may receive information regarding the voltage, the current, and the temperature of each battery pack 10, the OCV, the SOH, and the SOC of the battery module 12, or the OCV change of the battery module 12 from the BMS 14 of the battery cell.

The BMS 14 and the charge control part 24 may include at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and units to perform other functions.

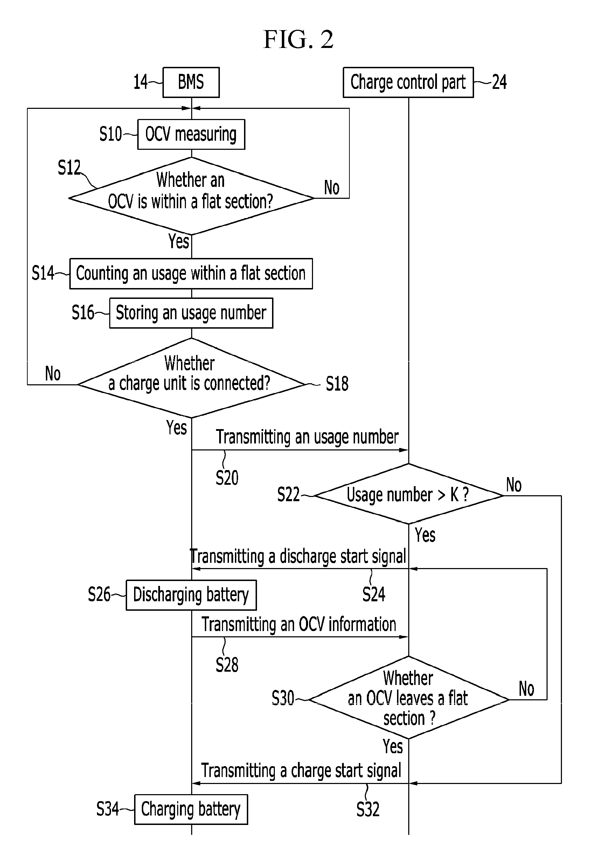

Next, a method of charging the battery module 12 according to the number of times that the OCV of the battery module 12 is changed will be described with reference to FIG. 2. FIG. 2 is a flowchart of a battery charging method according to a first exemplary embodiment of the present invention. The battery pack 10 is connected to the load, thereby supplying the power stored to the battery pack 10 to the load. The load may be various electrical devices consuming power such as home appliances or factory production equipment.

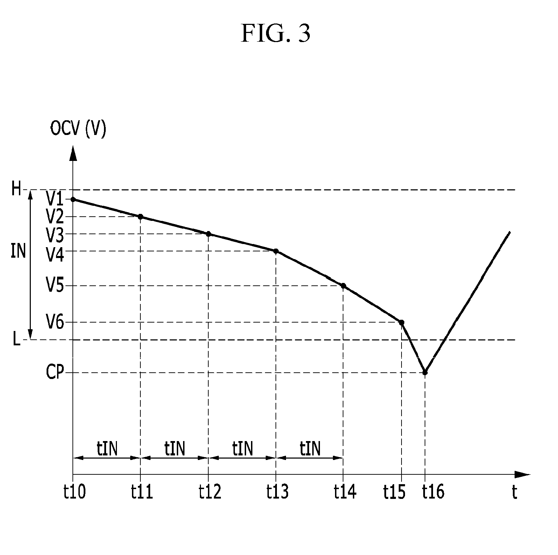

Firstly, the BMS 14 measures the OCV of the battery module 12 (S10). At this time, the BMS 14 periodically measures the OCV of the battery module 12, as described in FIG. 1. Thus, the BMS 14 determines whether the power is consumed by the load such that the decreased OCV of the battery module 12 is within a flat section IN (S12). Usage within the flat section IN will be described with reference to FIG. 3.

FIG. 3 is a graph of an OCV of a battery charged by a battery charging method according to a first exemplary embodiment of the present invention. As shown in the drawing, the BMS 14 may measure the OCV of the battery module 12 with an interval of a predetermined time tIN.

The BMS 14 may initially measure the OCV of the battery module 12 at a time t10, and may measure the OCV of the battery module 12 at a time t11 after the predetermined time tIN from the time t10. Also, the BMS 14 may measure the OCV of the battery module 12 at a time t12 after the time t11 by the predetermined time tIN, a time t13 after the time t12 by the predetermined time tIN, and a time t14 after the time t13 by the predetermined time interval tIN.

Firstly, at the time t10, the OCV of the battery module 12 may be measured as V1. At the time t10, if the battery pack 10 is connected to the load and the power stored in the battery module 12 is used, the OCV of the battery pack 10 will decrease. That is, by the use of the power, the OCV of the battery module 12 of the time t11 is decreased to V₂.

Since the OCV is decreased from V₁ to V₂, the BMS 14 may determine whether the power usage from the time t10 to the time t11 results in the OCV remaining within the predetermined voltage range within the flat section IN (between V=H and V=L).

Next, from the time t11 to the time t12, since the OCV of the battery module 12 is decreased from V₂ to V₃, the BMS 14 may determine whether the OCV from the time t11 to the time t12 is within the flat section IN.

From the time t12 to the time t13, since the OCV of the battery module 12 is decreased from V₃ to V₄, the BMS 14 may determine whether the OCV from the time t12 to the time t13 is within the flat section IN.

From the time t13 to the time t14, since the OCV of the battery module 12 is decreased from V₄ to V₅, the BMS 14 may determine whether the OCV from the time t13 to the time t14 is within the flat section IN.

Thus, since the OCV of the battery module 12 measured from the time t10 to the time t14 is within the flat section IN, the BMS 14 records the number of instances of power usage (the usage number) within the flat section IN as a total of four (S₁₄) and stores the usage number to the memory 16 (S16).

Next, the BMS 14 determines whether the battery pack 10 is connected to the charging unit 20 (S18). For example, the connection of the charging unit 20 may be determined through a sensor (not shown) sensing whether the charging terminal b is connected to the pack terminal a. Also, in a case that the battery pack 10 and the charging unit 20 are wirelessly connected, the BMS 14 may determine the connection of the charging unit 20 when receiving an initial connection start signal for a wireless power change.

Further, the BMS 14 transmits the usage number stored to the memory 16 to the charging unit 20 (S20). The BMS 14 and the charging unit 20 may be connected through a separate terminal or a wireless communication network as well as the connection between the pack terminal a and the charging terminal b.

On the other hand, the BMS 14 may also transmit the OCV information V6 of the battery module 12 at the time t15 to the charge control part 24. However, when the measuring of the OCV of the battery module 12 is possible through the charging terminal b of the charging unit 20, the transmission of the OCV information V6 of the battery module 12 may be omitted.

Thus, the charge control part 24 determines whether the usage number exceeds a predetermined number (S22). For example, the predetermined number may be set as 3 times.

When the usage number exceeds the predetermined number, the charge control part 24 transmits a signal for starting the discharge of the battery module 12 (S24). The charge control part 24 may transmit the signal for starting the discharge of the battery module 12 to the BMS 14 to discharge the battery module 12. Also, the charge control part 24 appropriately controls the charging part 22 to discharge the battery module 12.
At this time, the charge control part 24 may discharge the battery module 12 by further considering the OCV of the battery module 12.

For example, in a case that the charge control part 24 receives information for the current OCV of the battery module 12 from the BMS 14 or measures the current OCV of the battery module 12 through the charging terminal b, if the OCV of the battery module 12 is less than a lowest limitation value L of the flat section, the usage number is not determined, and a signal for starting the charge of the battery module 12 may be transmitted to BMS 14 S32.

Further, if the OCV of the battery module 12 is greater than the lowest limitation value L of the flat section, the charge control part 24 determines whether the usage number exceeds the predetermined number, and if the usage number exceeds the predetermined number, the charge control part 24 transmits the discharge start signal to the BMS 14, thereby discharging the battery module 12.

When the charge control part 24 transmits the signal starting the discharge of the battery module 12 to the BMS 14, the BMS 14 controls the switching operation of the relay part 17 to discharge the battery module 12 (S26) so as to connect the battery module 12 to the discharge load 18.

At the time t15 of FIG. 3, if the charging unit 20 and the battery pack 10 are connected, the step S20 to the step S23 are performed, and the charge control part 24 may transmit the signal for discharging the power stored to the battery module 12 to the BMS 14.

Also, when the usage number is less than the predetermined number, the charge control part 24 may transmit the signal for starting the charge of the battery module 12 to the BMS 14 (S32).

After the discharge is started, the BMS 14 transmits the information for the OCV of the battery module 12 to the charge control part 24 (S28). If the measuring of the OCV of the battery module 12 is possible by the charging terminal b of the charging unit 20, the step S28 may be omitted.

Thus, the charge control part 24 determines whether the OCV of the battery module 12 leaves the flat section IN (S30). For example, since the power stored to the battery module 12 is discharged, the charge control part 24 may determine whether the OCV of the battery module 12 is less than a threshold value CP.

When it is determined that the OCV of the battery module 12 is less than the threshold value CP of the flat section IN, the charge control part 24 starts the charge of the battery module 12 (S30). At the time t16 of FIG. 3, the charge control part 24 may transmit the signal for starting the charge of the battery module 12 to the BMS 14 and supply the power to the battery module 12 through the charging part 22.

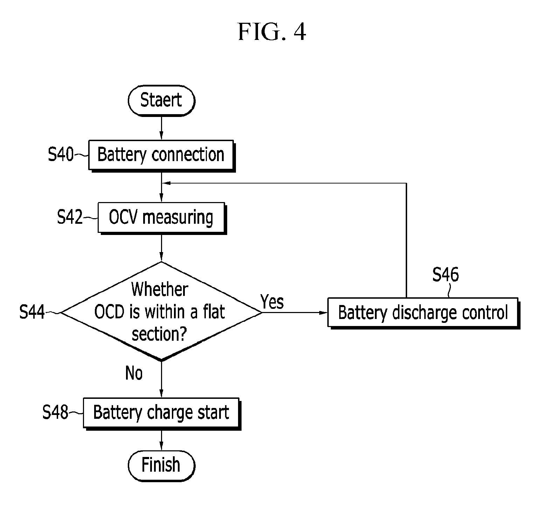

Thus, the BMS 14 controls the switching operation of the relay part 17 to charge the battery module 12 so as to connect the battery module 12 to the pack terminal a (S34). Next, the charging unit 20 measuring the OCV of the battery module 12 and charging the battery module 12 will be described with reference to FIG. 4.

FIG. 4 is a flowchart of a battery charging method according to a second exemplary embodiment of the present invention. As shown in the drawing, the charging unit 20 is connected to the battery pack 10 (S40).

The charge control part 24 of the charging unit 20 measures the OCV of the battery module 12 (S42). For example, the charge control part 24 may measure the OCV of the battery module 12 by the charging terminal b. At this time, the charge control part may include the coulomb counter measuring the charge, the temperature, the open circuit voltage, and the load cycle or time of the battery module 12.

Thus, the charge control part 24 may determine whether the OCV of the battery module 12 is within the flat section IN. The OCV of the battery module 12 of the flat section IN with reference to FIG. 4 will now be described.

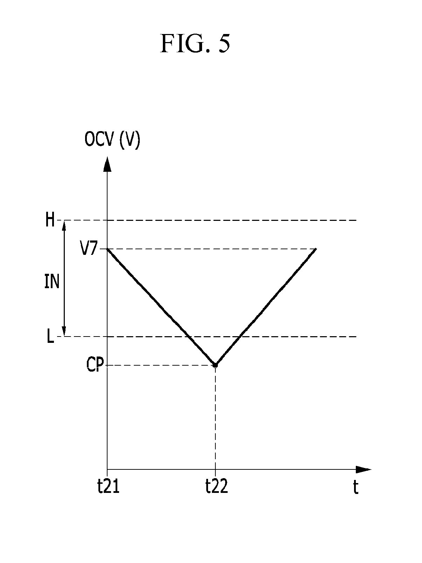

FIG. 5 is a graph of an OCV of a battery charged by a battery charging method according to a second exemplary embodiment of the present invention. As shown in the drawing, the OCV of the battery module 12 at the time t21 is V7. The voltage value V7 may be determined as a value within the flat section IN (between V=H and V=L).

For example, the charge control part 24 may determine whether the OCV of the battery module 12 is within the flat section IN by using a plurality of comparators. The charge control part 24 may set the reference voltage of a first input terminal of a comparator as the highest limitation value H and the lowest limitation value L, and may apply the OCV of the battery module 12 to a second input terminal of the comparator. Thus, the charge control part 24 may determine whether the OCV of the battery module 12 is within the flat section IN by using the output of the comparator.

Next, when the OCV of the battery module 12 is within the flat section IN, the charge control part 24 transmits the signal for starting the discharge of the battery module 12 (S46).

Next, when it is determined that the OCV of the battery module 12 leaves the flat section IN according to the discharge, the charge control part 24 transmits the signal for starting the charge of the battery module 12 (S48).

For example, the charge control part 24 measures the OCV of the battery module 12 at the time t22, when the measured OCV is less than the threshold value CP, the signal charging the battery module 12 may be transmitted to the battery management system.

While this invention has been described in connection with what are presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A battery charging device (20) comprising:
a charging unit (22) connectable to a battery pack, the battery pack comprising a battery module (12) that includes at least one battery cell; and
a charge control part (24) arranged to receive information relating to the number of measurements in which an open circuit voltage OCV value of the battery module (12) is determined to be within a predetermined voltage range;
the charge control part being arranged to discharge the battery module if the number of measurements exceeds a predetermined threshold.

2. The battery charging device of claim 1, wherein
the charge control part is arranged to receive open circuit voltage information of the battery module, and to transmit a discharge start signal to the battery module when the open circuit voltage is within the predetermined voltage range.

3. The battery charging device of claim 2, wherein
the charge control part is arranged to transmit a charging start signal to the battery module to charge the battery module if the open circuit voltage is outside the predetermined voltage range.

4. The battery charging device of claim 1, 2 or 3, wherein:
the charging unit includes a charging terminal connected to the battery module and a coulomb counter measuring an open circuit voltage of the battery module by using the charging terminal; and
the charge control part is arranged to transmit the discharge start signal in response to the open circuit voltage value as measured by the coulomb counter.

5. The battery charging device of any one of the preceding claims, wherein
if the measurement number is less than the predetermined number, the charge control part is arranged to transmit a charging start signal to charge the battery module.

6. The battery charging device of any one of the preceding claims, wherein the open circuit voltage is periodically measured by a battery management system, the number of measurements being incremented when the periodic measurement indicates that the open circuit voltage is within the predetermined voltage range.

7. A battery charging device comprising:
a charging unit connected to a battery module including at least one battery cell and charging the battery module; and
a charge control part measuring an open circuit voltage of the battery module and controlling the charging unit to discharge the battery module when the open circuit voltage value is within a predetermined voltage section.

8. The battery charging device of claim 7, wherein
the charge control part controls the charging unit to charge the battery module if the open circuit voltage is outside the predetermined voltage section.

9. A battery charging method comprising:
receiving number measurement information of which an open circuit voltage value of the battery module is determined within a predetermined voltage section from a battery management system managing a battery module including at least one battery cell; and
transmitting a signal for discharging the battery module to the battery management system if it is determined that the number measurement exceeds a predetermined number.

10. The battery charging method of claim 9, further comprising:
receiving the open circuit voltage information of the battery module from the battery management system; and
generating the signal for discharging the battery module if the open circuit voltage is within the predetermined voltage section.

11. The battery charging method of claim 10, further comprising
transmitting the signal charging the battery module to the battery management system if it is determined that the open circuit voltage is outside the predetermined voltage section from the open circuit voltage information.

12. The battery charging method of claim 9, further comprising
transmitting the signal charging the battery module to the battery management system, if it is determined that the measurement number is less than the predetermined number.

13. The battery charging method of claim 9, wherein
the measurement number includes a number of which the open circuit voltage within the predetermined voltage section is measured when the open circuit voltage is periodically measured by the battery management system.

14. A battery charging method comprising:
measuring an open circuit voltage of a battery module if the battery module including at least one battery cell is connected;
transmitting a signal for discharging the battery module to a battery management system managing the battery module when the open circuit voltage is within a predetermined voltage section; and
transmitting a signal for charging the battery module to the battery management system if the open circuit voltage is outside the predetermined voltage section according to the discharge of the battery module.
